Europäisches Patentamt

European Patent Office

Office européen des brevets

(11) Veröffentlichungsnummer: **0 263 420**
**A2**

(12) **EUROPÄISCHE PATENTANMELDUNG**

(21) Anmeldenummer: **87114210.5**

(22) Anmeldetag: **29.09.87**

(51) Int. Cl.⁴: **H04Q 1/14**

(30) Priorität: **10.10.86 DE 3634643**

(43) Veröffentlichungstag der Anmeldung:
**13.04.88 Patentblatt 88/15**

(84) Benannte Vertragsstaaten:
**AT BE CH DE IT LI**

(71) Anmelder: **Siemens Aktiengesellschaft Berlin und München**
**Wittelsbacherplatz 2**
**D-8000 München 2(DE)**

(72) Erfinder: **Steiner, Ewald, Ing. grad.**
**Fichtenweg 11**
**D-8137 Berg 3(DE)**
Erfinder: **Monk, Ronald Richard, Dipl.Ing.**
**10 Lorrimor Close**
**AU-03930 Victoria, Mount Eliza(AU)**

(54) Vorrichtung zum Prüfen von elektrischen Leitungen in Verteilern von Telekommunikationsanlagen.

(57) Die Schichtbausteine des Verteilers enthalten Doppelreihen von Anschlußelementen (1) für nach außen und innen führende elektrische Leitungen (4). Zwischen Trennkontaktstellen (5) der Anschlußelemente (1) im Inneren der Schichtbausteine sind Steckzungen (6) von Vielfachtrennsteckern (2) einsteckbar. Die Trennstecker (2) sind als gedruckte Leiterplatten ausgebildet, die im Bereich der Trennkontaktstellen (5) Kontaktflächen (7) aufweisen, von denen aus Leiterbahnen (8) nach außen zu Kontaktzonen (9) führen, die außerhalb der Anschlußelemente (1) für Prüfschnüre leicht zugänglich angeordnet sind.

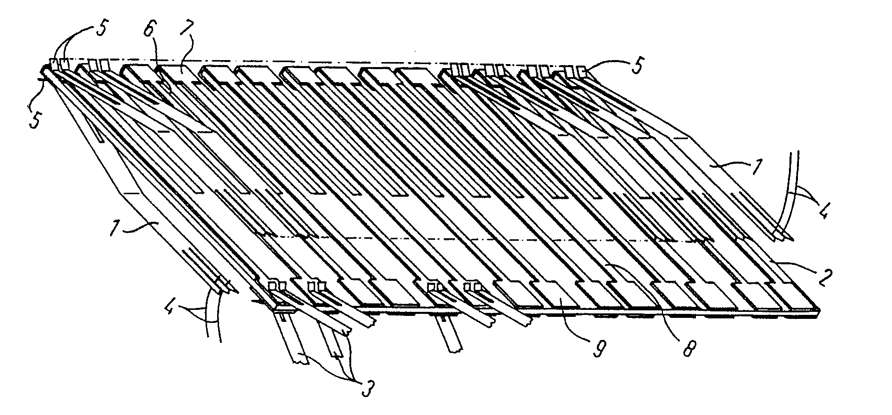

## Vorrichtung zum Prüfen von elektrischen Leitungen in Verteilern von Telekommunikationsanlagen

Die Erfindung bezieht sich auf eine Vorrichtung zum Prüfen von elektrischen Leitungen in Verteilern von Telekommunikations-, insbesondere Fernsprechanlagen.

Durch die DE-PS 20 48 104 ist es bekannt, einen Verteiler aus flachen Schichtbausteinen zusammen zu setzen, die mit Reihen von Anschlußelementen für die elektrischen Leitungen versehen sind. Die Anschlußelemente erstrecken sich annähernd geradlinig von der Verteilerfrontseite aus in das Innere des Schichtbausteines und bilden dort Trennkontaktstellen zwischen den Außen-und Innenleitungen des Verteilers. Die Trennkontaktstellen können mit Hilfe von einfachen Isolierstoffsteckzungen aufgetrennt werden, die ebenfalls von der Frontseite her durch besondere Steckkanäle zwischen den Anschlußelementepaaren eingesteckt werden können.

Es ist ferner bekannt, bei der Neueröffnung, Erweiterung oder bei dem Austausch von alten durch moderne Vermittlungsanlagen die Verteiler komplett vorzuverdrahten und die Leitungen bis zur endgültigen Fertigstellung der Anlagen mit Hilfe von Trennstekkern zu unterbrechen, die sich über die gesamte Breite eines Schichtbausteines erstrecken. Ein derartiger Vielfachstecker ist z.B. in dem Siemens-Katalog "Schwachstromverteilereinrichtungen in lötfreier Anschlußtechnik", Zustand März 81, Seite 50 wiedergegeben. Da die Trennstecker in sämtliche neu angelegten Schichtbausteine eingesteckt werden, behindern sie den freien Zugang zu den äußeren Zonen der Anschlußelemente zu Prüfzwecken. Derartige Leitungsprüfungen müssen vor dem Einschalten der Anlage vorgenommen werden. Das Prüfen erfolgt mit Hilfe von Prüfschnüren, die entsprechend den Anschlußelementen geformte Prüfspitzen aufweisen. Ein derartiges Ansetzen der Prüfschnüre ist insbesondere bei hochgelegenen Schichtbausteinen schwierig.

Der Erfindung liegt die Aufgabe zugrunde, die Prüfarbeiten zu erleichtern.

Diese Aufgabe wird durch die Erfindung gemäß Anspruch 1 gelöst. Die Anschlußstellen für die Prüfschnüre befinden sich nun außerhalb der Anschlußelemente des Schichtbausteines und sind damit erheblich besser zugänglich. Der Trennstecker kann an seiner Außenkante so ausgebildet werden, daß die Anschlußmittel der Prüfschnüre in einfacher und sicherer Weise angesetzt werden können. Die Prüfschnüre können beispielsweise mit Steckkontakten versehen sein, die auf die Kontaktzonen des Trennsteckers aufgeschoben werden.

Nach einer Weiterbildung der Erfindung ist der Trennstecker als gedruckte Leiterplatte ausgebildet. Dies ermöglicht eine kostengünstige Herstellung des Trennsteckers, wobei die Kontaktflächen und Kontaktzonen ebenso wie die Leiterbahnen in einem Arbeitsgang hergestellt werden.

Nach einer anderen Weiterbildung der Erfindung ist der Trennstecker als beidseitig gedruckte Leiterplatte ausgebildet. Dadurch ist es möglich, vom Verteiler aus sowohl nach außen wie nach innen führende Leitungen zu prüfen, ohne daß der Trennstekker in seiner Lage verändert werden muß.

Im folgenden wird die Erfindung anhand eines in der Zeichnung dargestellten Ausführungsbeispieles näher erläutert.

Die dargestellte Figur zeigt schematisiert in perspektivischer Ansicht zwei Reihen von Anschlußelementen 1 eines nicht näher dargestellten Schichtbausteines eines Verteilers in einer Fernsprechvermittlungsanlage mit einem Trennstecker 2 und Steckkontakten 3 von nicht näher dargestellten Prüfschnüren.

Je eine Reihe der Anschlußelemente 1 dient dem Anschluß von internen bzw. externen Leitungen 4. Die Anschlußelemente 1 erstrekken sich von den Anschlußstellen für die Leitungen 4 aus geradli nig in das Innere des Schichtbausteines und bilden an ihren inneren Enden Trennkontaktstellen 5, die durch dazwischengeschobene Steckzungen 6 des Trennsteckers 2 getrennt sind. Die Steckzungen 6 weisen im Bereich der Trennkontaktstellen 5 Kontaktflächen 7 auf, die mit den Trennkontaktstellen 5 kontaktiert sind. Von den Kontaktflächen 7 aus erstrecken sich gedruckte Leiterbahnen 8 zur äußeren Kante des Trennsteckers 2, wo sie in Kontaktzonen 9 für die Steckkontakte 3 enden. Die Kontaktzonen 9 liegen außerhalb der freien Enden der Anschlußelemente 1 und sind damit für die Prüfschnüre leicht zugänglich. Der Trennstecker 2 ist als zweiseitig gedruckte Leiterplatte ausgebildet, so daß sowohl die nach innen wie nach außen führenden Leitungen 4 geprüft werden können.

## Ansprüche

1. Vorrichtung zum Prüfen von elektrischen Leitungen (4) in Verteilern von Telekommunikations-, insbesondere Fernsprechanlagen, wobei der Verteiler mit Schichtbausteinen versehenist, die mit Reihen von Anschlußelementen (1) für die elektrischen Leitungen (4) versehen sind, wobei die Anschlußelemente (1) annähernd geradlinig in das Innere des Schichtbausteines hineinragen und dort Trennkontaktstellen (5) bilden, zwischen die von der Anschlußseite her Steckzungen (6) von Trennsteckern (2) einsteckbar sind, die mit ihrer Außenkante die Anschlußelemente (2) überragen, **dadurch gekennzeichnet,** daß die Steckzungen (6) mit den Trennkontaktstellen (5) kontaktierbare Kontaktflächen (7) aufweisen, von denen aus elektrische Leiter (z.B. 8) zum Außenbereich des Trennsteckers (2) führen und in außerhalb der Anschlußelemente (1) gelegenen definierten Kontaktzonen (9) zum Anschalten von Prüfschnüren enden.

2. Vorrichtung nach Anspruch 1, **dadurch gekennzeichnet,** daß der Trennstecker (2) als gedruckte Leiterplatte ausgebildet ist.

3. Vorrichtung nach Anspruch 2, **dadurch gekennzeichnet,** daß der Trennstecker (2) als beidseitig gedruckte Leiterplatte ausgebildet ist.